# EUROPÄISCHE PATENTSCHRIFT

(11) **EP 0 677 155 B1**
(45) Veröffentlichungstag und Bekanntmachung des Hinweises auf die Patenterteilung: **12.03.1997**
(21) Anmeldenummer: 94904063.8
(22) Anmeldetag: 30.12.1993
(51) Int. Cl.: F16H 1/32

(54) **GETRIEBEANORDNUNG**
GEAR DEVICE
DISPOSITIF DE TRANSMISSION

(30) Priorität: 31.12.1992 CS 4050/92
(43) Veröffentlichungstag der Anmeldung: 18.10.1995
(73) Patentinhaber: Herstek, Josef, 086 42 Hertnik (SK)
(72) Erfinder: Herstek, Josef, 086 42 Hertnik (SK)
(74) Vertreter: Jeck, Anton, Dipl.-Ing.
(86) Internationale Anmeldenummer: SK9300006
(87) Internationale Veröffentlichungsnummer: WO9416243

(56) Entgegenhaltungen:
- EP-A- 0 470 741
- DE-A- 2 112 631
- US-A- 3 994 187

## Beschreibung

Die Erfindung betrifft ein Getriebe zur Übertragung von Drehbewegungen nach dem Oberbegriff des Anspruches 1. Ferner betrifft die Erfindung ein Differentialgetriebe, durch das exzentrische und Rotationsbewegungen eines Ritzels in zentrische Rotationsbewegungen einer langsamlaufenden Kurbelwelle, nachfolgend auch Planetenradträger bezeichnet, transformiert werden.

In der EP 470 741 Al ist ein Getriebe offenbart, dessen Satellitenträger aus zwei axial angeordneten Mitnehmern besteht, was den Aufbau des Getriebes technisch aufwendig macht. Ein weiterer Nachteil, mit dem das bekannte Getriebe behaftet ist, besteht darin, daß die zentrale Kurbelwelle im zentralen Teil des Satellitenträgers angeordnet ist.

Die US-A 3 994 187 zeigt weiterhin eine Getriebeanordnung mit einer zentralen Eingangswelle mit exzentrischen Abschnitten, die mit Planetenrädern zusammenarbeiten, die auf exzentrischen Wellenabschnitten von zentrische Abschnitte aufweisenden Planetenradwellen sitzen, um die Eingangsdrehzahl auf einen Planetenradträger weiterzuleiten, in dem die zentrischen Abschnitte der Planetenradwellen gelagert sind,
wobei die Planetenräder mit ihrer Außenverzahnung mit einer Innenverzahnung eines Hohlrades in Eingriff stehen, und
wobei der Planetenradträger ein linkes und ein rechtes flanschähnliches Element mit jeweiligen Oeffnungen aufweist, in denen die zentrischen Abschnitte der Planetenradwellen drehbar gelagert sind.

Herkömmliche Getriebe dieser Art lösen das Problem der Drehzahlreduktion zwischen einer langsamlaufenden und einer schnellaufenden Kurbelwelle, nachfolgend auch als Eingangswelle bezeichnet, auf zweierlei Art, nämlich durch ein Zentralsystem und ein Planetensystem. Das Zentralsystem besteht aus einem Innenzahnrad, das mit einem Getriebegehäuse fest verbunden ist, und einem Ritzel mit Außenverzahnung, die mit der Innenverzahnung des Rades kämmt. Die zentrale Kurbelwelle ist in bezug auf das Innenzahnrad über ihre zentrische Partie und mittels schnellaufender Lager drehbar gelagert, während das Ritzel am Kurbelteil in einer zentralen zylindrischen Öffnung drehbar gelagert ist. Das Ritzel ist an seiner Umfangsseite mit zylindrischen Öffnungen versehen. Mit diesen Öffnungen stehen Futter im Eingriff, die auf zylindrischen Zapfen mit geringem Spiel aufgesetzt sind. Die zylindrischen Zapfen sind im Körper der langsamlaufenden Kurbelwelle axial angeformt, und zwar auf einem gleichen Kreis und mit gleichen Abständen, wie es bei den exzentrischen zylindrischen Öffnungen des Ritzels der Fall ist. Die langsamlaufende Kurbelwelle ist im Rad drehbar und zentrisch gelagert. Als Nachteil des bekannten zentralen Systems werden folgende Tatsachen angesehen:

Die Auslastung der Zapfen im Getriebe ist nicht effektiv, da bei Übertragung des Moments vom Ritzel auf die langsamlaufende Kurbelwelle in der radialen Ebene immer nur eine Hälfte der gesamten Zapfen ausgelastet ist. Darüberhinaus hat die ungleichmäßige Belastungsverteilung der einzelnen Zapfen eine hohe Konzentrationsbelastung bei meistbelasteten Zapfen zur Folge, was zur erhöhten Abnutzung des gegebenen Zapfens und des Futters führt. Um eine hinreichende Belastbarkeit, hinreichende Festigkeit sowie hinreichende Lebensdauer des Getriebes zu erreichen, ist es erforderlich, die Querschnitte und die Anzahl der Zapfen groß zu halten, wobei auch die langsamlaufende Kurbelwelle robust gebaut werden muß, indem die Zapfen frei getragen sind. Dies hat zur Folge, daß das Gewicht des Getriebes erheblich und unerwünscht anwächst. Im derartigen Getriebe kommt es bei der Zentralkurbelwelle zur übermäßigen Konzentration der Belastung, und zwar in radialer Ebene, weil die Kurbelwelle nicht nur die effektive Belastung von der Kraftwirkung her überträgt, sondern auch eine Belastung, die vom Drehmoment herrührt. Das herkömmliche Getriebe bildet beim Anlaufen und bei geringen Geschwindigkeiten keine Schmierschicht zwischen den Zapfen und dem Futter, so daß es in diesem Arbeitsbereich mit halbtrockener Reibung arbeitet. Das hat zur Folge, daß die Zapfen und die Futter einem erhöhten Verschleiß unterliegen, wobei unerwünschte Wärme erzeugt wird, und darüberhinaus der Lauf unterbrochen wird, der als Quelle unerwünschter Schwingungen angesehen wird. Bei Getrieben mit höherer Übersetzung kommt es zur Verringerung der tangentialen Umdrehungsgeschwindigkeit der Futter an den Zapfen. Dadurch wird die Einsatzmöglichkeit des einstufigen Getriebes verringert. Um diese Grenze zu überwinden, ist es zweckmäßig, zwei, drei oder mehrere in Serie geschaltete Getriebe einzusetzen. Dies hat aber zur Folge, daß der Wirkungsgrad eines solchen Getriebes sinkt. Eine weitere Einschränkung erfährt das herkömmliche Getriebe aufgrund seiner Positionierung. Denn bei der Übertragung von Rotationsbewegungen vom Ritzel auf eine langsamlaufende Kurbelwelle ist es problematisch, in der Übertragungskette kleines Spiel zu erreichen. Darüber hinaus kommt es bei geringen Umdrehungen der langsamlaufenden Kurbelwelle zu der bereits erwähnten halbtrockenen Reibung.

Planetensysteme sind gebildet aus zwei integrierten, in Serie geschalteten Getriebestufen. Die erste Stufe ist mit einer herkömmlichen Stirnverzahnung mit geraden Zähnen versehen. Sie besteht ferner aus einem schnellaufenden Ritzel, das mit zwei bzw. drei außenverzahnten Zahnrädern kämmt. Diese sind fest mit einer Kurbelwelle verbunden und in einer langsamlaufenden Kurbelwelle drehbar gelagert. Die zweite Differenzstufe ist durch ein Zahnradpaar gebildet, deren Ritzel mit einer äußeren Verzahnung und das Rad mit einer Innenverzahnung versehen sind. Das Ritzel arbeitet mit seiner äußeren Verzahnung mit der Innenverzahnung des Rades zusammen. In bezug auf das Zahnrad ist in langsamlaufenden Lagern eine langsamlaufende Kurbelwelle angeordnet. Die Kurbelwelle besteht aus einem Flansch mit axial sich erstreckenden Verbindungsorganen, die auf einem Kreis angeordnet sind, und einer Stirnplatte, die mit den Verbindungsorganen verbunden sind. Der Flansch und die Platte sind mit durchgehenden zylindrischen Kurbelöffnungen, die auf einem Kreis angeordnet sind, und mit einer durchgehenden zylindrischen Öffnung für das schnellaufende Ritzel versehen. Zwischen dem Flansch und der Platte sind mehrere Ritzel angeordnet, wobei jedes Ritzel mit zylindrischen Kurbelöffnungen versehen ist, die auf einem Kreis angeordnet sind. Auf einem anderen Kreis sind durchgehende Öffnungen für Verbindungselemente mit durchgehenden zylindrischen Öffnungen für das schnellaufende Ritzel ausgebildet. In den durchgehenden zylindrischen Kurbelöffnungen der langsamlaufenden Kurbelwelle sind über zentrische Partien Kurbelwellen in Lagern drehbar gelagert, während auf der exzentrischen Partie der Kurbelwelle ein Ritzel in durchgehenden Kurbelöffnungen drehbar gelagert ist. Jede Kurbelwelle ist zwischen zwei Wänden angeordnet. Ein solches zwei-stufiges Getriebe, wo die erste Stufe durch ein Planetengetriebe und die zweite Stufe durch ein Differentialgetriebe gebildet ist, bringt den Vorteil in Form einer Drehzahlreduktion am Eingang der zweiten Stufe mit sich, jedoch Nachteile, die aus der Verzahnung als solchen herrühren.

Die erste Übersetzungsstufe (Vorschaltgetriebe):
Die Herstellung von Zahnrädern ist kompliziert und kostenintensiv, insbesondere bei höheren Festigkeitsgraden. Das Vorschaltgetriebe ist eine Schwingungsquelle des Getriebes, da die Festigkeit der Zähne von der Lage des Mitnehmerpunktes äbhängig ist. Das Vorschaltgetriebe hat darüberhinaus einen geringeren Wirkungsgrad und wird als Quelle von Geräuschen angesehen, die die Kurbelwelle belasten.

Die zweite Schaltstufe (Differential):
Die Belastung der Kurbelwellen in radialer Ebene ist ungleichmäßig, und während einer Umdrehung der Kurbelwelle ändert sich die Belastung der Kurbelwellen von 0 bis Maximum. Gleichzeitig ändert sich die Festigkeit des Ausgangsteiles des Getriebes nach der Formel (2 × π /Anzahl der Kurbelwellen). Die Änderungen in der Belastung der Kurbelwellen und die sich ändernde Festigkeit haben einen negativen Einfluß auf den ruhigen Lauf des Getriebes.

Ausgehend von dem obigen Stand der Technik liegt der Erfindung die Aufgabe zugrunde, hier Abhilfe zu schaffen.

Die gestellte Aufgabe wird erfindungsgemäß durch die Merkmale des Patentanspruches 1 gelöst. Ausgestaltungen sind in den abhängigen Ansprüchen aufgeführt.

Zwischen beiden Flanschen befinden sich mehrere Ritzel, die mit einer Außenverzahnung versehen sind und die mit der Innenverzahnung des Zahnrades in Eingriff stehen. Zur Bildung eines Zahnradpaares können alle Arten von Stirnzahnrädern verwendet werden. Jedes Ritzel ist mit durchgehenden zylindrischen Satellitenöffnungen versehen, die auf einem Kreis angeordnet sowie mit Durchgangsöffnungen und mit einer durchgehenden zylindrischen Öffnung versehen sind. Eine feste Verbindung zwischen den Flanschen der langsamlaufenden Kurbelwelle kann in unterschiedlicher Weise verwirklicht sein, und zwar in Form von Verbindungsorganen, variablen Verbindungsorganen und kompakten Verbindungsorganen. Die Verbindungsorgane bestehen aus einem Distanzfutter, einem Fixationsrohr und einer Verbindungsschraube, die beide Flansche fest verbindet und gleichzeitig verbindet sie auch die langsamlaufende Kurbelwelle mit der angetriebenen Einheit. Das Fixationsrohr mit geringfügig größerem Außenumfang ist in den Ankeröffnungen beider Flansche eingepreßt und gleichzeitig in der Öffnung des Distanzfutters angeordnet. Bei der andereren Ausführungsform des Verbindungsorgans sind das Fixationsrohr und die Ankerschraube durch eine Paßschraube ersetzt. Das kompakte Verbindungsorgan ist durch einen Anschlag mit Profil eines Zwischenkreissegments gebildet, wobei beide Flansche mit dem Anschlag mittels einer Schraube und einem Stift verbunden sind. Darüberhinaus ist eine Ankerschraube vorgesehen. Der äußere Umfang der Distanzfutter und der Anschläge, auf denen das Ritzel über seine Durchgangsöffnungen aufgesetzt ist, kann unterschiedliche Formen aufweisen. Für die unterschiedlichen Ausführungsformen des äußeren Umfanges der axialen Verbindungskörper der langsamlaufenden Kurbelwelle gilt, daß sie von der Lage und der Form der Durchgangsöffnungen des Ritzels abhängig sind. Dies ist zum einen durch die Form sowie die Lage des äußeren Umfanges der axialen Verbindungskörper und zum anderen durch die exzentrischen Bewegungen des Ritzels bedingt, bei denen zwischen den Durchgangsöffnungen des Ritzels und dem äußeren Umfang der axialen Verbindungskörper der langsamlaufenden Kurbelwelle minimales Spiel eingehalten werden muß. Vor dem Anschließen des Getriebes an eine angetriebene Einheit ist die langsamlaufende Kurbelwelle im kompakten Zustand durch Schrauben gehalten. Für beide Flansche der langsamlaufenden Kurbelwelle und für die Ritzel gilt, daß die Satellitenöffnungen beider Flansche und die Satellitenöffnungen der Ritzel auf gleichen Kreisen liegen, und zwar mit gleichmäßiger Verteilung, wobei die Durchgangsöffnungen zwischen zwei Satellitenöffnungen des Ritzels und die Verbindungskörper der langsamlaufenden Kurbelwelle auf einem Kreis zwischen zwei Satellitenöffnungen der Flansche angeordnet sind. Für beide Flansche der langsamlaufenden Kurbelwelle und die Ritzel gilt, daß die Satellitenöffnungen beider Flansche und die Satellitenöffnungen der Ritzel auf gleichen Kreisen liegen und dabei auf den Kreisen gleichmäßig verteilt sind. Dabei sind die Durchgangsöffnungen des Ritzels zwischen zwei Satellitenöffnungen des Ritzels angeordnet, während das Verbindungsorgan der langsamlaufenden Kurbelwelle auf einem Kreis zwischen zwei Satellitenöffnungen des jeweiligen Flansches angeordnet sind. In den Satellitenöffnungen der langsamlaufenden Kurbelwelle sind Satellitenkurbelwellen drehbar gelagert, und zwar an ihren beiden Enden und in zentrischen Lagern der Satellitenkurbelwelle. Gleichzeitig ist in bezug auf das Rad auch die zentrale Kurbelwelle drehbar gelagert, und zwar intern oder extern. Intern ist die Kurbelwelle in zentrischen Lagern der zentralen Kurbelwelle gelagert, und zwar an beiden Enden in zentralen Öffnungen des linken und des rechten Flansches. Extern ist sie durch Aufsetzen auf die Kurbelwelle des Rotors der antreibenden Einheit gelagert, die eine eigene Lagerung aufweist. Die exzentrische Lagerung spart eine bzw. beide zentrische Lagerungen der zentralen Kurbelwelle. Am Kurbelteil der zentralen Kurbelwelle ist das Ritzel in der Zentralöffnung drehbar gelagert, und zwar in Kurbellagern der zentralen Kurbelwelle, während die Kurbelteile der Satellitenkurbellager in Satellitenöffnungen des Ritzels gelagert sind, und zwar in Kurbellagern der Satellitenkurbelwellen. Die Exzentrität der zentralen Kurbelwelle sowie die Exzentrizität der Satellitenkurbelwellen sind in einer radialen Schnittebene identisch, wobei diese Exzentrizität dem Achsabstand des Zahnradpaares entspricht, das durch das Zahnrad und das Ritzel definiert ist. Das Multisatellitengetriebe kann ein eigenes Vorschaltgetriebe zur Drehzahlreduktion der zentralen Kurbelwelle aufweisen. Das Getriebe weist ein schnellaufendes Ritzel, das mit den Satellitenzahnrädern zusammenarbeitet, auf. Die Satellitenzahnräder sind mittels Satellitenlager auf Zapfen der Mitnehmer drehbar gelagert, die fest mit der zentralen Kurbelwelle verbunden sind. Die Satellitenzahnräder arbeiten mit Kronenzahnrädern zusammen, die mit dem rechten Flansch der langsamlaufenden Kurbelwelle fest verbunden sind.

Durch diese Maßnahmen wird eine zweckmäßige Verteilung der Belastung erreicht, bei der die zentrale Kurbelwelle ausschließlich die Kraftwirkung überträgt, während die Satellitenkurbelwellen nur das Moment der Verzahnung übertragen. Dadurch wird während einer Umdrehung und konstanten Momentbelastung der langsamlaufenden Kurbelwelle eine lineare Belastung der Zentralkurbelwelle und der Satellitenkurbelwelle erreicht. Darüber hinaus wird durch die hohe Festigkeit der langsamlaufenden Kurbelwelle, ferner durch die Verteilung der Satellitenkurbelwellen auf dem maximalen Durchmesser und durch die hohe Härte des Kurbelwellensystems eine hohe kurzfristige Momentbelastbarkeit des Getriebes erreicht, die das Siebenfache der regelmäßigen Belastung überschreiten kann. Durch die obigen Vorteile, wie Beseitigung einer nicht linearen Steifigkeit der Übersetzung zusammen mit hoher Steifigkeit und optimaler dynamischer Ausgewogenheit der rotierenden Teile wird eine hohe Stabilität des Getriebes erreicht. Ein wesentlicher Vorteil des Planetengetriebes ist seine technologische Einfachheit und sein geringer Arbeitsaufwand, die sich aus dem einfachen Aufbau herleiten lassen. Die Konstruktion beinhaltet keine komplizierten Flächen oder Formen, die regelmäßig spezielle Bearbeitungstechnologien vorraussetzen. Die Konstruktion setzt vielmehr einfache geometrische Flächen vorraus. Darüber hinaus besteht die langsamlaufende Welle aus drei separaten Teilen des linken und des rechten Flansches, die entweder identisch oder sehr verwandt sind, und aus Verbindungsorganen mit einfachen Formen. Diese Konzeption hat die Herstellung einer langsamlaufenden Welle deutlich vereinfacht, wobei eine hohe Festigkeit der langsamlaufenden Welle erreicht wird.

Charakteristische Eigenschaften des Getriebes:
Bei Verwendung schlupffreier Verzahnung sind minimales Spiel, das während der gesamten Lebensdauer gewährleistet ist, und sehr geringe Energieverluste erreichbar, und zwar deswegen, weil im Getriebe alle wichtigen Formen von Gleitreibungen beseitigt wurden. Einstufige Multisatellitengetriebe werden in sehr breiter Palette von Übersetzungen, nämlich von 1 zu 6 bis 1 bis 300, verwirklicht. Diese arbeiten in einem breiten Drehzahlbereich, d. h. von fast 0 Umdrehungen bis zu Umdrehungen, die durch die obere Drehzahl der schnellerlaufenden Lager definiert sind. Die Gesamtmaße des Getriebes sind definiert durch die einzelnen Komponenten und durch die Möglichkeit einer Minimierung der Komponenten. Das Getriebe hat einen sehr ruhigen Lauf im gesamten Drehzahlbereich, wodurch eine Geräuschquelle beseitigt wurde.

Zwei Ausführungsbeispiele der Erfindung sind in der Zeichnung schematisch dargestellt und werden im folgenden näher erläutert. Es zeigen
- Fig. 1: einen Schnitt durch zwei Radialebenen, von denen die eine durch die Achse der Planetenradwelle und gleichzeitig durch die Zentralmittelachse des Getriebes führt, während die zweite Schnittebene durch die zentrale Achse des Getriebes und durch die Achse des Verbindungsorganes führt,

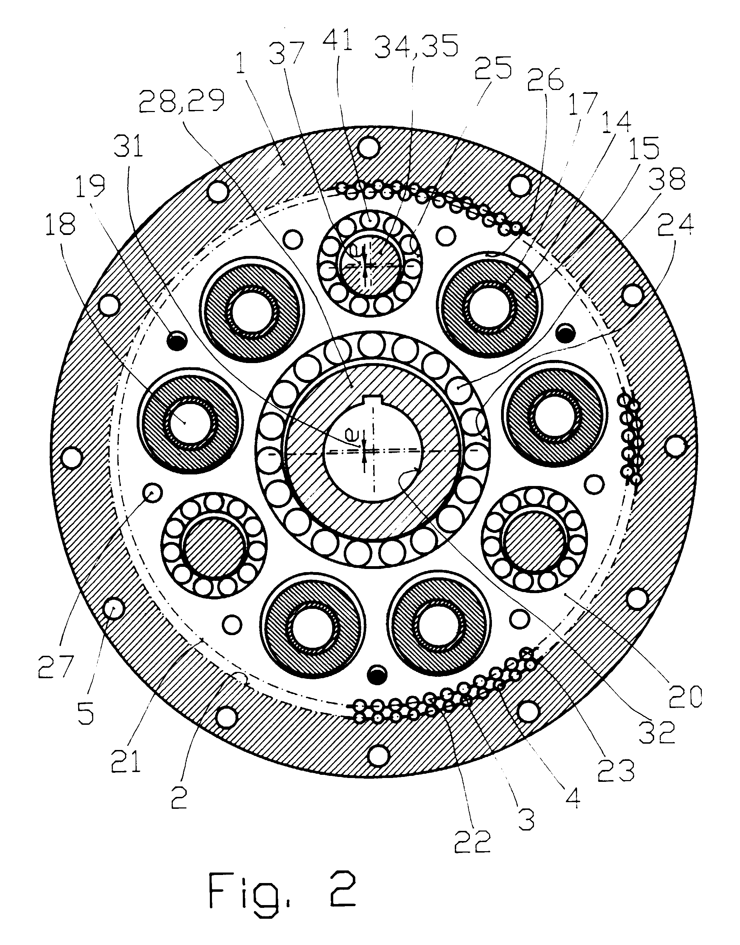

- Fig. 2: einen Schnitt entlang der Linie A-A nach Fig. 1,

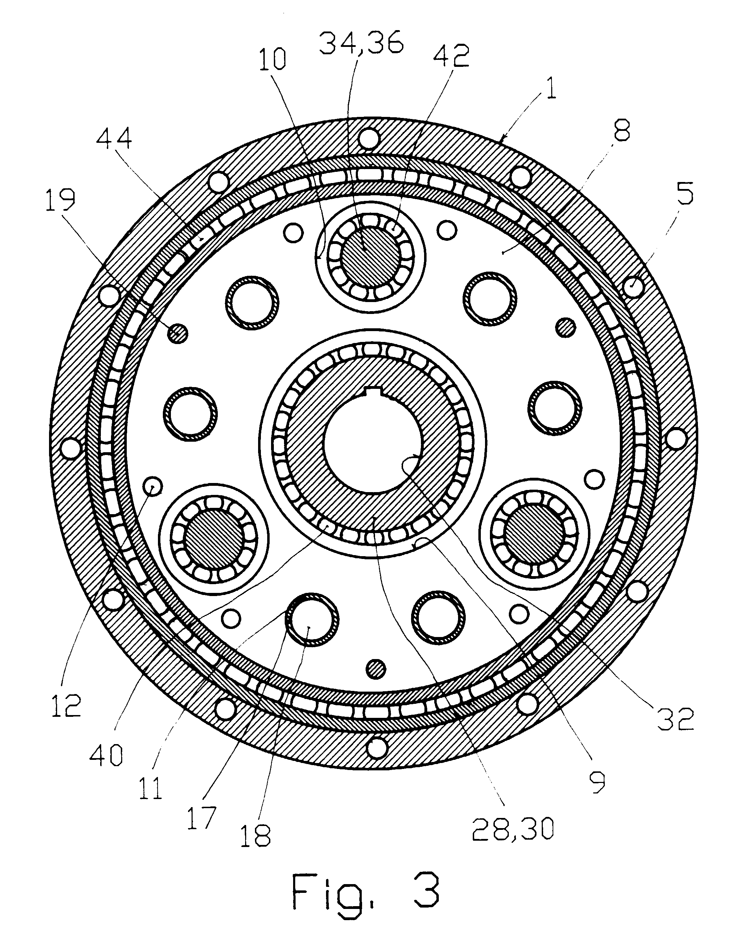

- Fig. 3: einen Schnitt entlang der Linie B-B nach Fig. 1,

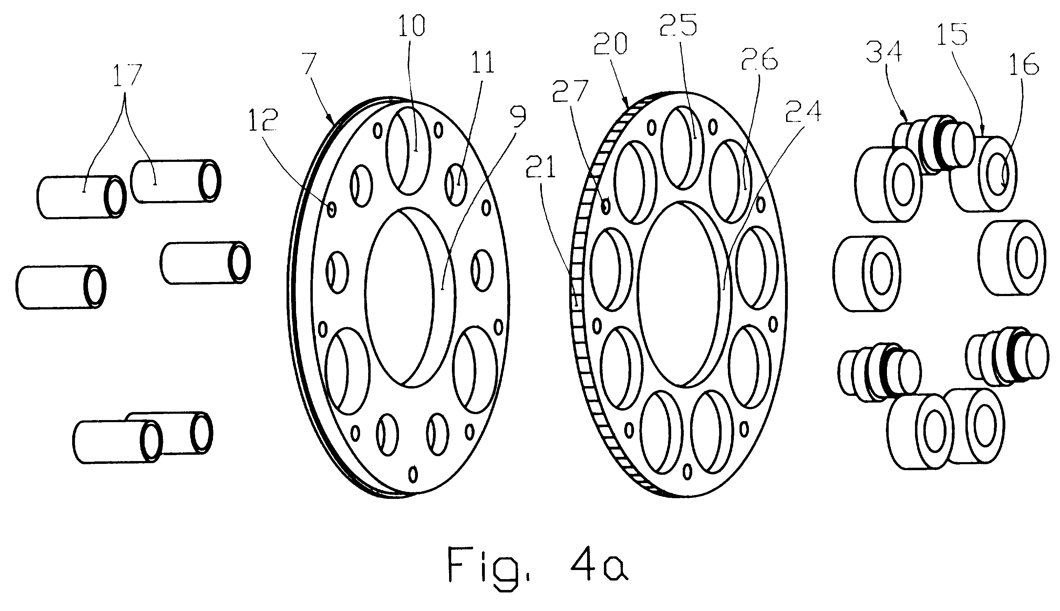

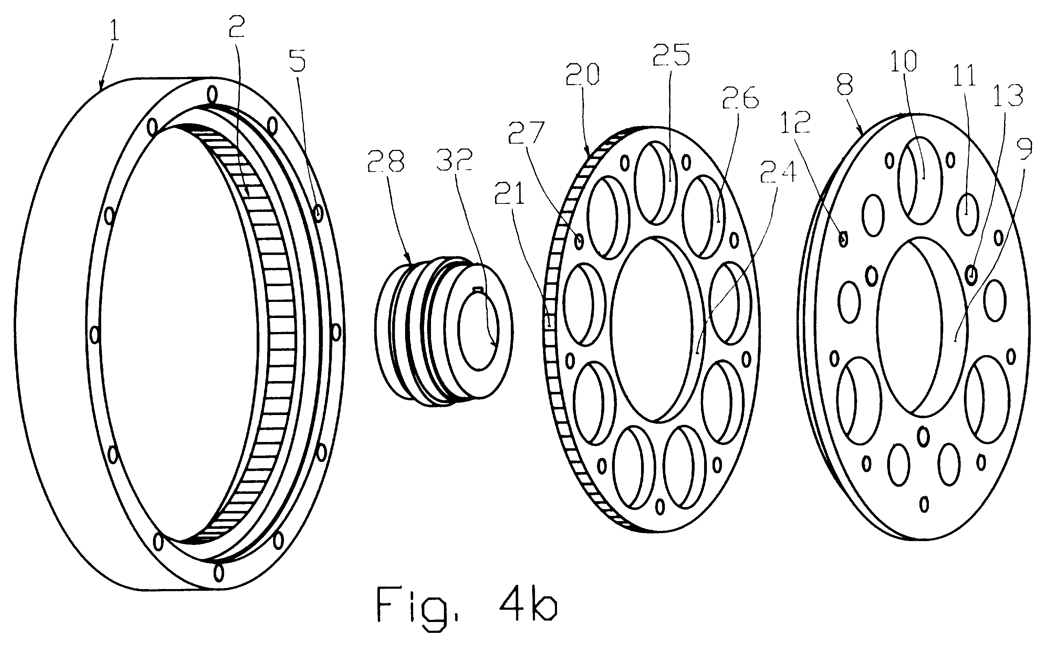

- Fig. 4a, 4b: in Explosionsdarstellung Teile des Planetengetriebes,

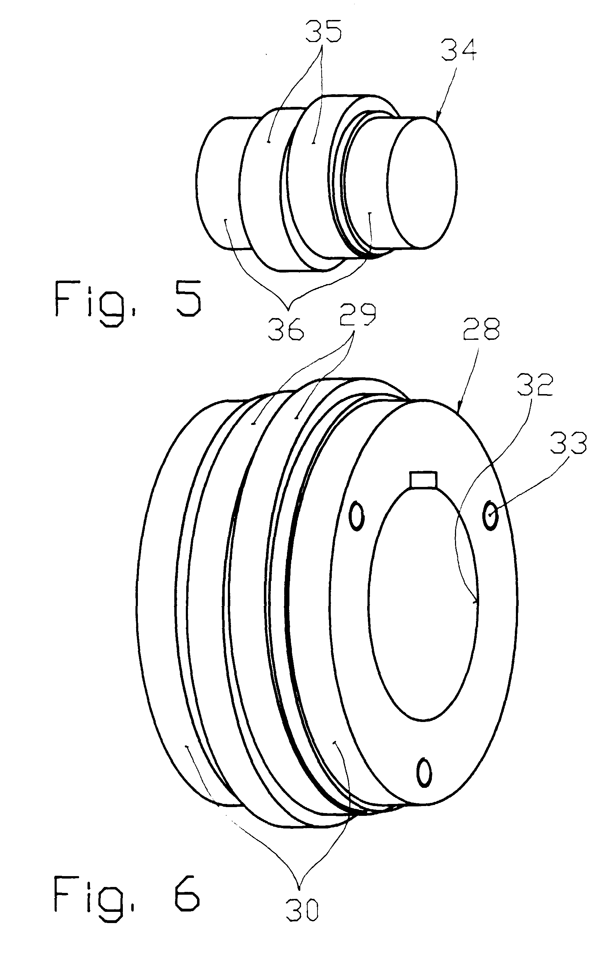

- Fig. 5: eine Planetenradwelle, vergrößert dargestellt,
- Fig. 6: eine zentrale Eingangswelle, vergrößert dargestellt,

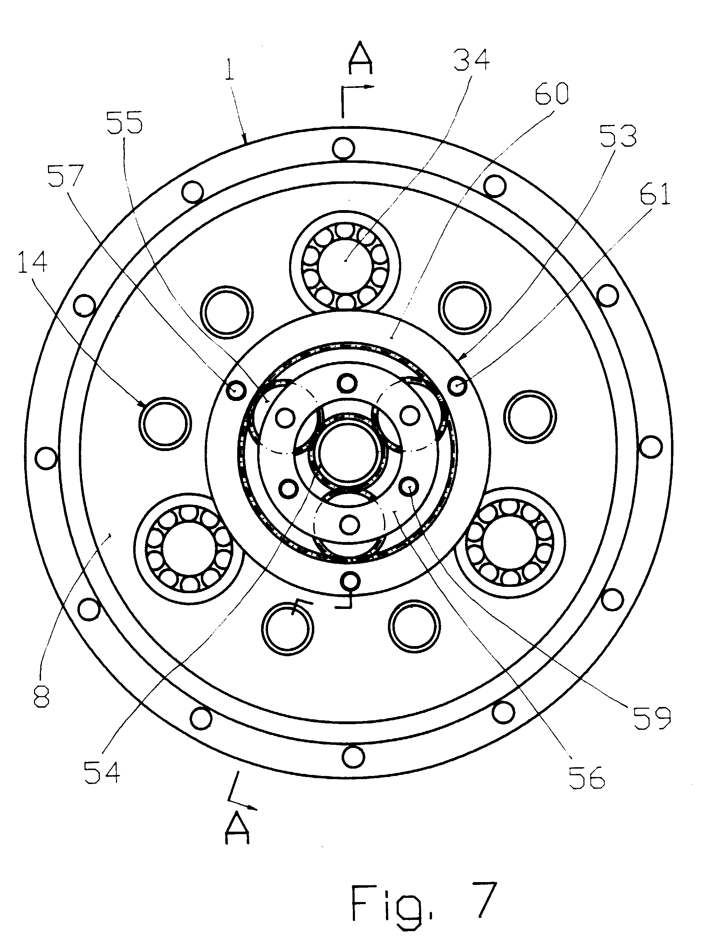

- Fig. 7: ein Vorschaltgetriebe in Axialansicht,

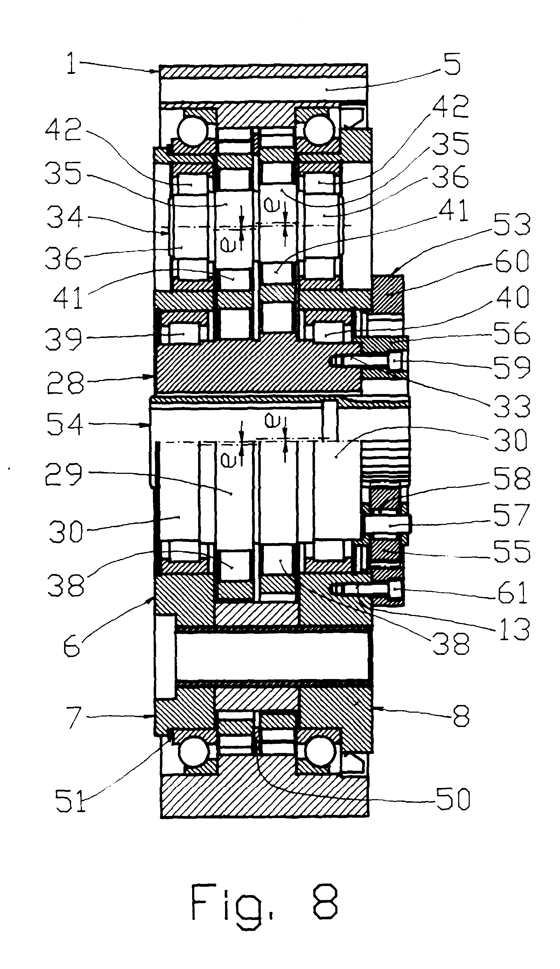

- Fig. 8: einen Schnitt entlang der Linie A-A nach Fig. 7,

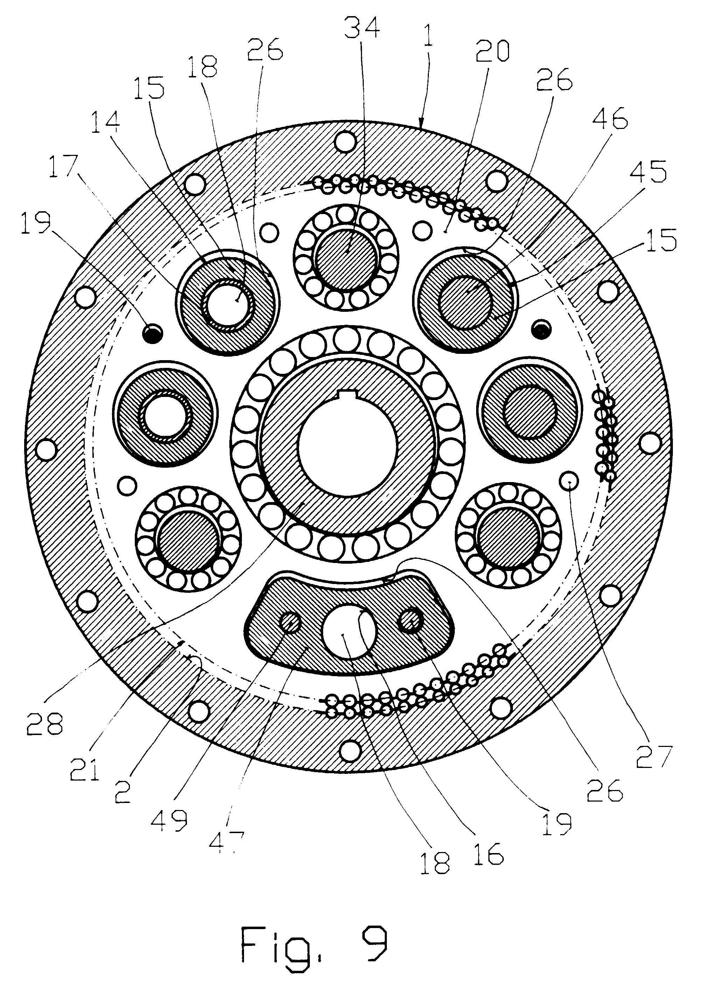

- Fig. 9: einen Radialschnitt des Vorschaltgetriebes nach Fig. 8 und

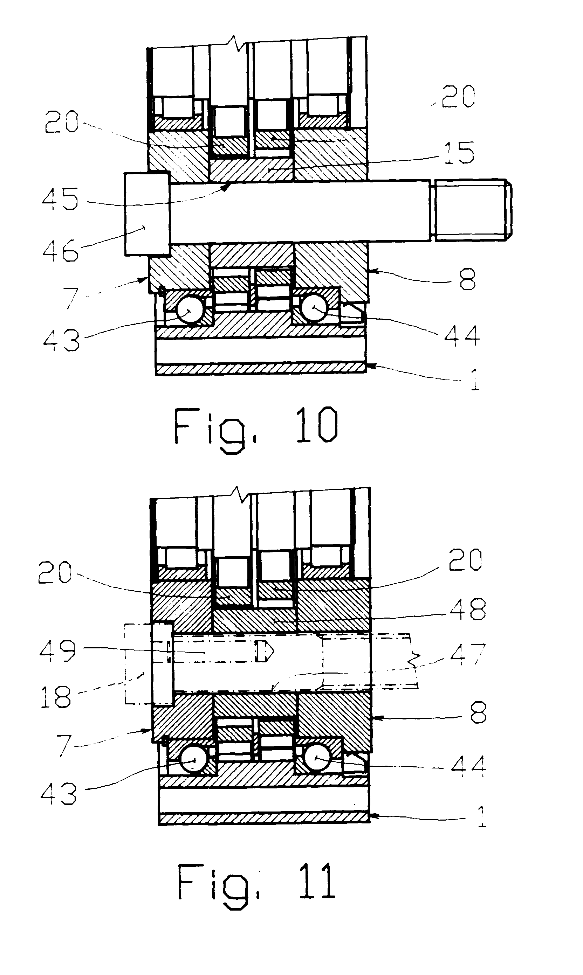

- Fig. 10 und Fig. 11: Schnitte durch Verbindungselemente der langsamlaufenden Welle.

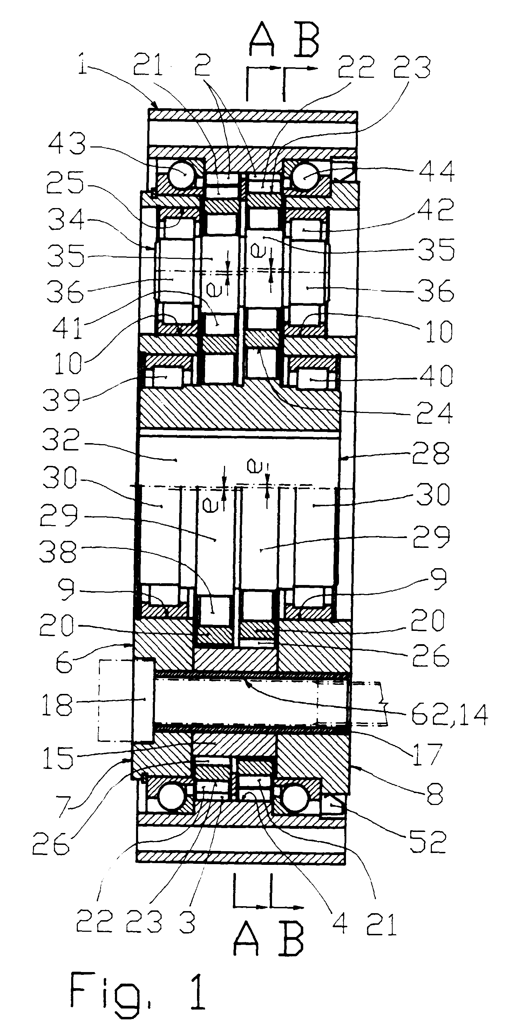

In Fig. 1 ist das Zahnrad 1 mit einer Innenverzahnung 2 und Ankeröffnungen 5 versehen. Im Zahnrad 1 ist der langsamlaufende Planetenradträger 6 an beiden Seiten in langsamlaufenden Kugellagern 43, 44 mit schrägwinkligem Kontakt gelagert. Der langsamlaufende Planetenradträger 6 besteht aus einem linken Flansch 7, einem rechten Flansch 8 und aus axialen Verbindungsorganen 62, durch die die Flansche 7,8 fest miteinander verbindbar sind. Jeder Flansch 7 und 8 weist eine zentrale durchgehende Öffnung 9, drei durchgehende zentrische Satellitenöffnungen 10 und sechs durchgehende zylindrische Ankeröffnungen 11 auf, die auf einem Verteilungskreis gleichmäßig verteilt sind. Beide Flansche 7, 8 sind durch drei Verbindungsschrauben 19 miteinander verbunden. Die Schrauben 19 führen durch technologische Öffnungen 12 hindurch. Der rechte Flansch 8 weist Gewindeöffnungen 13 auf. Die axialen Verbindungsorgane 62 bestehen aus Verbindungsmitteln 14. Die Verbindungsmittel 14 bestehen aus einem Distanzfutter 50, einem Fixationsrohr 17 und einer Ankerschraube 18, die die beiden Flansche verbinden. Das Fixationsrohr 17 weist einen geringfügig größeren Umfang auf und ist eingepreßt in der Ankeröffnung 11 des linken Flansches 7, und zwar in der Öffnung 16 des Distanzfutters 15, und in der Ankeröffnung 11 des rechten Flansches 8. Der langsamlaufende Planetenradträger 6 kann auch andere Ausführungsformen besitzen. In einer der Ausführungsformen ist das Standardverbindungsmittel 14 durch ein einfaches Verbindungsmittel 45 ersetzt, in dem das Fixationsrohr 17 und die Ankerschraube 18 durch eine Paßschraube 46 ersetzt sind. In einer anderen Ausführungsform sind zwei Verbindungsmittel 14 oder zwei einfache Verbindungskörper 45 durch ein kompaktes Verbindungsmittel 47 ersetzt, das aus einem Anschlag 48, einer Ankerschraube 18, einem Stift 49 und einer Fixationsschraube 19 gebildet ist.

Zwischen den beiden Flanschen 7 und 8 der langsamlaufenden Planetenradträger 6 sind Planetenräder 20 mit Außenverzahnungen 21 angeordnet. Jedes Planetenrad 20 ist versehen mit jeweils einer durchgehenden zentralen zylindrischen Öffnung 24, mit drei durchgehenden zylindrischen Satellitenöffnungen 25, die auf einem Verteilungskreis angeordnet sind und mit sechs durchgehenden zylindrischen Öffnungen 26, die auf einem Verteilungskreis gleichmäßig verteilt sind. Die Durchgangsöffnung 26 des Planetenrades 20 ist so gewählt, daß beim Anbringen des Ritzels auf die Verbindungsmittel 14 und während der exzentrischen Bewegung des Planetenrades 20 das erforderliche Spiel zwischen dem Umfang des Verbindungsmittels 14 und den durchgehenden Öffnungen 26 eingehalten wird. Die Planetenräder 20 weisen technologische Öffnungen 27 auf, durch die Fixationsschrauben 19 mit Spiel durchgeführt sind. Die Satellitenöffnungen 10 des linken Flansches 7, die Satellitenöffnungen 25 des Planetenrades 20 und die Satellitenöffnungen 10 des rechten Flansches 8 sind auf gleichen zentrischen Verteilungskreisen angeordnet und hierbei in gleicher Weise verteilt. Die Ankeröffnungen 11 des linken Flansches 7, die durchgehenden Öffnungen 26 des Planetenrades 20 sowie die Ankeröffnungen 11 des rechten Flansches 8 sind auf gleichen zentrischen Verteilerkreisen angeordnet, besitzen gleichmäßige Verteilung und sind paarweise zwischen zwei Satellitenöffnungen angeordnet.

Die zentrale Eingangswelle 28 ist über ihre zentrischen Teile 30 in einer Zentralöffnung 9 des linken Flansches und in einer Zentralöffnung 9 des rechten Flansches mittels Zentrallager 39 und 40 drehbar gelagert. An den Abschnitten 29 der zentralen Eingangswelle 28, die aus zwei exzentrischen Zylindern mit entgegengerichteten Exzentrizitäten 31 gebildet sind, sind die Planetenräder 20 in Zentralöffnungen 24 mittels Kurbellager 38 drehbar gelagert. Den Innenteil der Eingangswelle 28 bildet eine durchgehende Kurbelöffnung 32, die eine Nut für eine Feder aufweist. An der Stirnseite der Eingangswelle 28 sind auf einem Verteilungskreis Gewindeöffnungen 33 ausgebildet. Eine andere Ausführungsform des Planetengetriebes weist eine extern angeordnete zentrale Eingangswelle 28 auf, die mittels einer Kurbelöffnung 32 an der Kurbel des Rotors eines Antriebes angeordnet ist, der eine eigene Lagerung aufweist. Auf diese Weise wird mindestens eines der Zentrallager 39 und 40 mit dazugehörigen Lagerflächen erspart. Die Planetenradwelle 34 ist an ihren beiden Seiten über zentrische Teile 36 drehbar gelagert, und zwar in Satellitenöffnungen 10 des linken Flansches 7 und in Satellitenöffnungen 10 des rechten Flansches 8 über zentrische Lager 42. Die Kurbelteile 35 der Planetenradwellen 34, die aus zwei exzentrischen Zylindern mit gegengerichteten Exzentrizitäten 37 gebildet sind, sind in Satellitenöffnungen 25 des Ritzels 20 über Kurbellager 41 drehbar gelagert. Das Zahnradpaar, das aus dem Zahnrad 1 mit Innenverzahnung 2 und dem Planetenrad 20 mit Außenverzahnung 21 gebildet ist, ist mit einer zylindrischen (Walzen) Verzahnung versehen. Die Innenverzahnung 2 des Zahnrades 1 bilden Mitnehmer 3, die in Aufnahmen 4 gelagert und auf einem Verteilerkreis gleichmäßig verteilt sind. Die Außenverzahnung 21 des Planetenrades 20 bilden Mitnehmer 22, die in Lagern 23 angeordnet und auf einem Verteilerkreis gleichmäßig verteilt sind. Die Größe der Exzentrizität 31 der zentralen Eingangswelle 28 und die Exzentrizität 37 der Planetenradwellen 34 sind in einer radialen Schnittebene gleichgroß und entsprechen dem Achsenabstand des obigen Zahnradpaares. Um die unerwünschte Viskositätsreibung zwischen zwei zugeordneten Flächen des Ritzels zu minimieren, sind diese Flächen über einen Ring 50 getrennt. Angrenzende ebene Flächen des Planetenrades 20 und des linken Flansches 7 sowie des Planetenrades 20 und des rechten Flansches 8 sind durch Stellflächen der inneren Ringe langsamlaufender Lager 43, 44 getrennt. Eine Vorspannung in den langsamlaufenden Lagern 43 und 44 wird durch eine Halterungsunterlage 51 erreicht. Um zu verhindern, daß in das Getriebe Verschmutzungen gelangen, ist dieses mit Dichtungskörpern 52 aus Gummi ausgestattet.

Im Bedarfsfall ist das Getriebe mit einem Vorschaltgetriebe 53 mit herkömmlicher Verzahnung ausgestattet, die eine selbständige Einheit bildet und die mit dem Planetengetriebe kompatibel ist. Das Vorschaltgetriebe 53 ist mit einem schnellaufenden Ritzel 54 ausgestattet, das mit Satellitenzahnrädern 55 kämmt. Diese Zahnräder 55 sind über Satellitenlager 58 an den Zapfen 57 drehbar gelagert. Die Zapfen 57 sind an beiden Enden im Mitnehmer 56 gestützt, wobei der Mitnehmer 56 mit der zentralen Eingangswelle 28 über Schrauben des Mitnehmers 59 fest verbunden ist. Die Satellitenzahnräder 55 arbeiten mit einem Hohlrad 61 zusammen, das über Schrauben des Hohlrades 61 fest mit dem rechten Flansch 8 des langsamlaufenden Planetenradträgers 6 verbunden ist. Durch Verdrehen der zentralen Eingangswelle 28 kommt es zur Transformation der schnellaufenden Rotationsbewegung der zentralen Eingangswelle 28 in eine schnellaufende exzentrische Bewegung des Planetenrades 20. Das Planetenrad 20 arbeitet hierbei über die Außenverzahnung 21 mit der Innenverzahnung 2 des Zahnrades 1. Durch diese Verbindung wird das Planetenrad 20 gezwungen, langsamlaufende Rotationsbewegungen auszuüben, die von der Größe der Differenz zwischen den Wälzkreisen des Zahnradpaares abhängig ist. Diese schnellaufende exzentrische Bewegung und gleichzeitig langsamlaufende Rotationsbewegung des Planetenrades 20 ist unter Zuhilfenahme der Planetenradwellen 34 in inverser Art in eine langsamlaufende Rotationsbewegung des langsamlaufenden Planetenradträgers 6 transformiert. Das vorgeschlagene Getriebe kann in verschiedenen Arbeitsbereichen vorteilhaft eingesetzt werden, z.B. bei Manipulatoren, drehbaren Tischen, Bearbeitungsmaschinen, Navigationssystemen, Luft- und Raumfahrtmotorreduktoren, Bergbaumaschinen, Aufzüge. Besonders vorteilhaft kann das Planetengetriebe dort eingesetzt werden, wo eine hohe kinematische Genauigkeit, Stabilität des Laufes, minimimales Spiel und geringe energetische Verluste vorausgesetzt werden.

## Patentansprüche

1. Getriebeanordnung mit einer zentralen Eingangswelle (28) mit exzentrischen und Lager (38, 38) tragenden Abschnitten (29, 29), die über diese Lager (38, 38) mit Planetenrädern (20, 20) zusammenarbeiten, die über weitere Lager (41, 41) auf exzentrischen Wellenabschnitten (35, 35) von zentrische Abschnitte (34, 36) aufweisenden Planetenradwellen (34, 35, 35, 36) sitzen, um die Eingangsdrehzahl auf einen langsamlaufenden Planetenradträger (6) weiterzuleiten, in dem die zentrischen Abschnitte (34, 36) der Planetenradwellen gelagert sind, wobei die Planetenräder (20, 20) mit ihrer Außenverzahnung mit einer Innenverzahnung eines feststehenden Hohlrades (1) in Eingriff stehen, wobei die Innenverzahnung des Hohlrades und die Außenverzahnung der Planetenräder durch zugeordnete Mitnehmer (3, 22) gebildet wird, wobei der Planetenradträger (6) einen linken und einen rechten Flansch (7, 8) mit jeweiligen Öffnungen (10) aufweist, in denen die zentrischen Abschnitte (34, 36) der Planetenradwellen drehbar gelagert sind, und wobei die Flansche über axial sich erstreckende Verbindungsmittel unverdrehbar verbunden sind.

2. Getriebeanordnung nach Anspruch 1,
dadurch gekennzeichnet,
daß das Planetenrad (20) Durchgangsöffnungen (26) aufweist und daß sowohl eine Zentralöffnung (24) als auch auf einem Kreis angeordneten Satellitenöffnungen (25) kreisrunden Querschnitt aufweisen.

3. Getriebeanordnung nach einem der Ansprüche 1 oder 2,
dadurch gekennzeichnet,
daß die Flansche (7,8) Ankeröffnungen (11) aufweisen, daß mindestens einer der Flansche (7,8) eine kreisrunde Zentralöffnung (9) besitzt und daß die auf einem Kreis angeordneten Öffnungen (10) kreisrunden Querschnitt besitzen.

4. Getriebeanordnung nach einem der Ansprüche 1 bis 3,
dadurch gekennzeichnet,
daß die Eingangswelle (28) über ihren zentrischen Teil (30) in der Zentralöffnung (9) des linken Flansches (7) und/oder in der Zentralöffnung (9) des rechten Flansches (8) drehbar gelagert ist.

5. Getriebeanordnung nach einem der Ansprüche 1 bis 4,
dadurch gekennzeichnet,
daß die axialen Verbindungsorgange (62) des langsamlaufenden Planetenradträgers (6) Verbindungsmittel (14) bilden, die aus einem Distanzfutter (15), einem Befestigungsrohr (17) und einer Ankerschraube (18) bestehen.

6. Getriebeanordnung nach einem der Ansprüche 1 bis 4,
dadurch gekennzeichnet,
daß die Verbindungsorgane (62) des langsamlaufenden Planetenradträgers (6) einfache Verbindungsmittel (45) bilden, die aus einem Distanzfumter (15) und einer Paßschraube (46) bestenen.

7. Getriebeanordnung nach einem der Ansprüche 1 bis 4,
dadurch gekennzeichnet,
daß die Verbindungsorgane (62) des langsamlaufenden Planetenträgers (6) kompakte Verbindungsmittel (47) bilden, die aus einem Anschlag (48) mit Profil eines Zwischenkreissegmentes und mindestens einer Ankeröffnung (11) bestehen, wobei beide Flansche (7,8) mit dem Anschlag (48) durch einen Stift (49), eine Schraube (19) sowie eine Ankerschraube (18) unverdrehbar verbindbar sind.

8. Getriebeanordnung nach einem der Ansprüche 1 bis 7,
dadurch gekennzeichnet,
daß die Öffnungen (10) des linken Flansches (7), die Satellitenöffnungen (25) des Planetenrades (20) und die Öffnungen (10) des rechten Flansches (8) auf gleichen Kreisen mit gleicher Teilung angeordnet sind, wobei die Durchgangsöffnungen (26) des Planetenrades (20) zwischen zwei Satellitenöffnungen (25) des Planetenrades (20) angeordnet sind, während die Verbindungsorgane (62) des langsamlaufenden Planetenradträgers (6) zwischen jeweils zwei Planetenradwellen angeordnet ist.

9. Getriebeanordnung nach einem der Ansprüche 1 bis 8,
gekennzeichnet durch
ein Vorschaltgetriebe (53) , das aus einem schnellaufenden und mit Satellitenzahnrädern (55) zusammenarbeitenden Ritzel (54) besteht, wobei die Satellitenzahnräder (55) mittels Satellitenlager (58) an Zapfen (57) gelagert sind, wobei die Zapfen (57) vom Mitnehmer (56) getragen sind und wobei der Mitnehmer (56) mit der zentralen Eingangswelle (28) verbunden ist, während die Satellitenzahnräder (55) mit einem Hohl-rad (60) zusammenarbeiten, das mit dem rechten Flansch (8) fest verbunden ist.

## Claims

1. Gear arrangement with a central input shaft (28) with sections (29, 29) carrying eccentrics and bearing (38, 38), which co-operate via these bearings (38, 38)by means of planet wheels (20, 20), which sit via further bearings (41, 41) on eccentric shaft portions (35, 35) of planet wheel shafts (34, 35, 35, 36) having central sections (34, 36) in order to transmit the input rotational speed to a slow-running planet-wheel carrier (6), in which the central sections (34, 36) of the planet wheel shafts are fitted, the planet wheels (20, 20) engaging with an internal toothing of a stationary ring gear (1), the internal toothing of the ring gear and the external toothing of the planet wheels being formed by associated drive means (3, 22), the planet wheel carrier (6) having a left and a right flange (7, 8) with respective apertures (10) in which the central sections (34, 36) of the planet wheel shafts are mounted to rotate, and the flanges being stationarily interconnected by axially-extending connecting means.

2. Gear arrangement according to claim 1,
characterised in that
the planet wheel (20) has continuous passage apertures (26), and in that both a central aperture (24) and also planetary apertures (25), disposed in a circle, have a circular cross-section.

3. Gear arrangement according to one of claims 1 or 2,
characterised in that
the flanges (7, 8) have anchoring apertures (11), in that at least one of the flanges (7, 8) has a circular central aperture (9), and in that the apertures (10) disposed in a circle have a circular cross-section.

4. Gear arrangement according to one of claims 1 to 3,
characterised in that
the input shaft (28) is fitted to rotate via its central section (30) in the central aperture (9) of the left flange (7) and/or is fitted to rotate in the central aperture (9) of the right flange (8).

5. Gear arrangement according to one of claims 1 to 4,
characterised in that
the axial connectors (62) of the slow-running planet wheel carrier (6) form connecting means (14) comprising a spacer lining (15), an attachment tube (17) and an anchoring bolt (18).

6. Gear arrangement according to one of claims 1 to 4,
characterised in that
the connectors (62) of the slow-running planet wheel carrier (6) form simple connecting means (45) comprising a spacer lining (15) and a set screw (46).

7. Gear arrangement according to one of claims 1 to 4,
characterised in that
the connectors (62) of the slow-running planet carrier (6) form compact connecting means comprising a stop (48) with the profile of an intermediate segment of a circle and at least one anchoring aperture (11), both flanges (7, 8) being stationarily connectable to the stop (48) by a pin (49), a bolt (19) and an anchoring bolt (18).

8. Gear arrangement according to one of claims 1 to 7,
characterised in that
the apertures (10) in the left flange (7), the planetary apertures (25) of the planet wheel (20), and the apertures (10) in the right flange (8) are disposed on identical circles with identical pitch, the continuous passage apertures (26) of the planet wheel (20) being disposed between two planetary apertures (25) in the planet wheel (20), while the connectors (62) of the slow-running planet wheel carrier (6) are disposed between two respective planet wheel shafts.

9. Gear arrangement according to one of claims 1 to 8,
characterised by
a transfer case gear (53) comprising a fast-running pinion (54) co-operating with planetary gearwheels (55), which are fitted by means of planetary bearings (58) on journals (57), said journals (57) being carried by the drive means (56), and the drive means (56) being connected to the central input shaft (28), while the planetary gearwheels (55) co-operate with a ring gear (60) which is stationarily connected to the right flange (8).

## Revendications

1. Mécanisme de transmission avec un arbre d'entrée central (28) avec des tronçons excentriques (29, 29) portant des paliers (38, 38), tronçons qui par l'intermédiaire de ces paliers (38, 38) coopèrent avec des pignons satellites (20, 20), eux-mêmes étant par l'intermédiaire d'autres paliers (41, 41) montés sur des tronçons d'arbre excentriques (35, 35) d'arbres (34, 35, 35, 36) de pignons satellites présentant des tronçons centraux (34, 36), pour transmettre le mouvement de rotation d'entrée à un porte-pignons satellites (6) à vitesse de rotation lente, porte-pignons satellites dans lequel sont montés les tronçons centraux (34, 36) des arbres de pignons satellites, les pignons satellites (20, 20) étant par leur denture extérieure en engagement avec une denture intérieure d'une roue creuse fixe (1), la denture intérieure de la roue creuse et la denture extérieure des pignons satellites étant constituée par des taquets d'entraînement associés (3, 22), le porte-pignons satellites (6) présentant une bride de gauche et une bride de droite (7, 8) avec des ouvertures respectives (10), dans lesquelles sont montés à rotation les tronçons centraux (34, 36) des arbres de pignons satellites, et les brides pouvant être reliées à l'abri de la rotation à l'aide de moyens de liaison à orientés axialement.

2. Mécanisme de transmission suivant la revendication 1,
caractérisé
en ce que le pignon satellite (20) présente des ouvertures de passage (26) et en ce que tant une ouverture centrale qu'également des ouvertures de satellites (25) disposées suivant un cercle présentent une section transversale circulaire.

3. Mécanisme de transmission suivant l'une ou l'autre des revendications 1 ou 2,
caractérisé
en ce que les brides (7, 8) présentent des ouvertures d'ancrage (11), en ce qu'au moins l'une des brides (7, 8) présente une ouverture centrale (9) circulaire et en ce que les ouvertures (10) disposées suivant un cercle présentent une section transversale circulaire.

4. Mécanisme de transmission suivant l'une quelconque des revendications de 1 à 3,
caractérisé
en ce que l'arbre d'entrée (28) est, par l'intermédiaire de sa partie centrale (30), monté à rotation dans l'ouverture centrale (9) de la bride de gauche (7) et/ou dans l'ouverture centrale (9) de la bride de droite (8).

5. Mécanisme de transmission suivant l'une quelconque des revendications de 1 à 4,
caractérisé
en ce que les organes de liaison axiaux (62) du porte-pignons satellites à rotation lente (6) forment des moyens de liaison (14), qui sont constitués par un coussinet d'écartement (15), par un tube de fixation (17) et par une vis d'ancrage (18).

6. Mécanisme de transmission suivant l'une quelconque des revendications de 1 à 4,
caractérisé
en ce que les organes de liaison (62) du porte-pignons satellites à rotation lente (6) forment des moyens de liaison simples (45), qui sont constitués par un coussinet d'écartement (15), et par une vis d'ajustage (46).

7. Mécanisme de transmission suivant l'une quelconque des revendications de 1 à 4,
caractérisé
en ce que les organes de liaison (62) du porte-pignons satellites (6) à rotation lente forment des moyens de liaison (47) qui sont constitués par une butée (48) à profil de segment de cercle intermédiaire et par au moins une ouverture d'ancrage (11), les deux brides (7, 8) pouvant être reliées à la butée par une goupille (49), une vis (19) ainsi qu'une vis d'ancrage (18).

8. Mécanisme de transmission suivant l'une quelconque des revendications de 1 à 7,
caractérisé
en ce que les ouvertures (11) de la bride de gauche (7), les ouvertures de satellite (25) du pignon satellite (20) et les ouvertures (10) de la bride de droite (8) sont disposés sur les mêmes cycles à pas identique, les ouvertures de passage (26) du pignon satellite (20) étant disposées entre les ouvertures de satellite (25) du pignon satellite (20), tandis que les organes de liaison (62) du porte-pignons satellites (6) à rotation lente sont chaque fois disposés entre deux arbres de pignons satellites.

9. Mécanisme de transmission suivant l'une quelconque des revendications de 1 à 8,
caractérisé
par une transmission primaire (53), constituée par un pignon (14) à rotation rapide coopérant avec des roues dentées satellites (55), les roues dentées satellites (55) étant par l'intermédiaire de paliers pour satellites (58) montées sur des tourillons (57), les tourillons (57) étant portés par le taquet d'entraînement (56), et le taquet d'entraînement (56) étant relié à l'arbre d'entrée central (28), tandis que les roues dentées satellites (55) coopèrent avec une roue creuse (60), qui est reliée rigidement à la bride de droite (8).
